# EUROPEAN PATENT APPLICATION

(11) **EP 4 678 696 A1**
(43) Date of publication of application: **14.01.2026**
(21) Application number: 23926545.7
(22) Date of filing: 19.12.2023
(51) Int. Cl.: C08L 67/04, C08L 25/14, C08G 63/91

(54) **POLYLACTIDE RESIN COMPOSITION WITH EXCELLENT MELT STRENGTH, AND METHOD FOR PREPARING SAME**

(30) Priority: 09.03.2023 KR 20230031173
(71) Applicant: LG Chem, Ltd., Yeongdeungpo-gu Seoul 07336 (KR)
(72) Inventor: CHO, Jeong Hun, Daejeon 34122 (KR); KIM, Sehoon, Daejeon 34122 (KR); OH, Wan Kyu, Daejeon 34122 (KR)
(74) Representative: Goddar, Heinz J.
(86) International application number: PCT/KR2023/020932
(87) International publication number: WO 2024/185973

(57) **Abstract**

The polylactide resin composition according to the present invention includes a polylactide oligomer whose end group is a carboxyl group, and thus, has excellent melt strength due to a high branching effect while maintaining the advantages of biodegradation.

## Description

### [TECHNICAL FIELD]

### CROSS-REFERENCE TO RELATED APPLICATION(S)

This application claims the benefit of Korean Patent Application No. 10-2023-0031173 filed on March 9, 2023 in the Korean Intellectual Property Office, the disclosure of which is incorporated herein by reference in its entirety.

The present invention relates to a polylactide resin composition having excellent melt strength, and a method for producing the same.

### [BACKGROUND ART]

Polylactide (or polylactic acid; PLA) resin is prepared based on bio-based raw materials, and is an environmentally friendly material that emits less carbon dioxide, which is a global warming gas, in a production process and is decomposed at specific temperatures and in composting facility. In recent years, it has also attracted attention as one of the materials that can replace existing crude oil-based resins as a measure to address waste plastic usage and carbon emission regulations. In addition, polylactide resin has the advantage of being cheaper than other biodegradable polymers and having high tensile strength and modulus characteristics.

However, because polylactide has low melt strength and melt elasticity, it is difficult to apply it to processes related to stretched physical properties, such as blowing, blow molding, spinning, foaming, and paper coating. As a method of improving melt strength, many attempts have been made to develop PLA with long chain, branched, crosslinked or star-shaped structures using a CE (chain extender) to thereby improve polymer chain entanglements. However, there is a problem that CE such as diisocyanate has toxicity and loses the advantages of biodegradation by using CE, and it is not easy to adjust the polymer structure, and it is difficult to find an appropriate CE concentration.

On the other hand, a method of improving melt strength by adding an epoxy-based branching agent to neat PLA are also being studied. However, because the carboxyl group and epoxy group of the PLA end group mainly react to form a branched structure, many differences in reactivity are also observed depending on the PLA acid value (influence of end groups by additives, initiators, etc.).

Alternatively, other polymers or micro- or nano-sized fillers may be introduced. However, there is a limitation in that blending with other polymers may lead to limitations in recycling and biodegradation, and the introduction of fillers is problematic in that uniform mixing and particle dispersion are not easily achieved.

Therefore, the present invention has a characteristic that a branching agent and a PLA oligomer with COOH end groups is introduced into polylactide to not only maintain the advantages of biodegradation of PLA but also improves melt strength due to its high branching effect, making it applicable to a wide molding window.

### [DETAILED DESCRIPTION OF THE INVENTION]

### [Technical Problem]

It is an object of the present invention to provide a polylactide resin composition having excellent melt strength. It is another object of the present invention to provide a polylactide resin composition that can be applied to molding processes such as blowing, blow molding, spinning, foaming, and paper coating through improvement of melt strength.

It is yet another object of the present invention to provide a method for producing the polylactide resin composition.

### [Technical Solution]

In order to achieve the above object, provided herein is the following polylactide resin composition:
A polylactide resin composition comprising:
a polylactide resin,
a polylactide oligomer whose end group is a carboxyl group, and
a branching agent.

The term "polylactide resin" as used herein is defined to collectively refer to a homopolymer or a copolymer comprising the following repeating units.

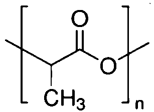

The polylactide resin can be prepared by a process including the step of forming the repeating unit by ring-opening polymerization of lactide monomers. The polymer obtained after completion of the ring-opening polymerization and the repeating unit formation process may be referred to as the "polylactide resin".

Herein, "lactide monomer" can be defined as follows. Generally, "lactide monomer" may be classified into L-lactide composed of L-lactic acid, D-lactide composed of D-lactic acid, and meso-lactide composed of one L-form and one D-form. Further, a mixture of L-lactide and D-lactide in a ratio of 50:50 is referred to as D,L-lactide or rac-lactide. It is known that, when polymerization is carried out by using only L-lactide or D-lactide having high optical purity, among these lactides, L- or D-polylactide (PLLA or PDLA) having high stereoregularity is obtained, and that such polylactide is rapidly crystallized and has high crystallinity compared to a polylactide having low optical purity. However, in the present specification, "lactide monomers" is defined as including all types of lactides regardless of the difference in characteristics of lactides according to the types thereof and the difference in characteristics of polylactide resins formed therefrom.

Meanwhile, the polylactide resin according to the present invention has a weight average molecular weight of 70,000 to 400,000 by way of example.

The present invention has a characteristic that such a polylactide resin is used in combination with a polylactide oligomer whose end group is a carboxyl group, thereby improving melt strength of the polylactide resin.

The term "polylactide oligomer whose end group is a carboxyl group" as used herein means that the end group of the polylactide oligomer is a carboxyl group. Specifically, polylactide oligomer has a hydroxy group at the end, and in the present invention, this means that such a hydroxy group is modified with a carboxyl group. For this purpose, reactions using various materials can be used, and in the present invention, modification is performed by using succinyl chloride. This will be described in more detail in Examples described later.

The polylactide oligomer whose end group is a carboxyl group may be any one selected from the group consisting of: 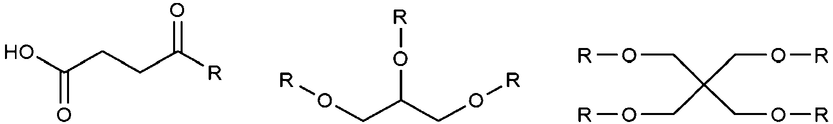 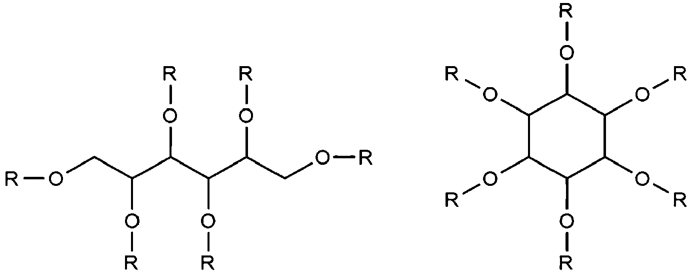 wherein, R is a substituent represented by the following Chemical Formula 2: 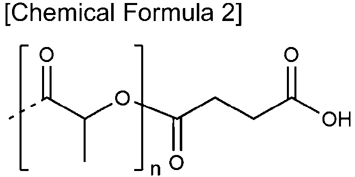 wherein, n represents the number of repeating unit.

Since the polylactide oligomer whose end group is a carboxyl group has a repeating unit derived from a lactide monomer similarly to the polylactide resin, it has the characteristic of not only being able to maintain the biodegradability characteristic of the polylactide resin composition of the present invention but also having excellent branching property with the polylactide resin. Further, when a polylactide oligomer whose end group is a carboxyl group and a branching agent are mixed with a polylactide resin, it is possible to improve melt strength due to a high branching effect. In addition, it causes a decrease in viscosity due to an increase in angular frequency, thereby capable of improving not only melt strength but also molding processability.

The polylactide oligomer whose end group is a carboxyl group can be adjusted according to the number of each lactide repeating unit. Preferably, the polylactide oligomer whose end group is a carboxyl group is 1,000 to 70,000.

Preferably, the polylactide oligomer whose end group is a carboxyl group is contained in an amount of 1 to 20 parts by weight based on 100 parts by weight of the polylactide resin. If the content is less than 1 part by weight, the effect due to the use of the polylactide oligomer whose end group is a carboxyl group is slight, and if the content exceeds 20 parts by weight, the inherent physical properties of the polylactide resin may be impaired.

In addition, the polylactide resin composition according to the present invention comprises a branching agent along with the polylactide resin and the polylactide oligomer whose end group is a carboxyl group.

Preferably, the branching agent is contained in an amount of 0.1 to 10 parts by weight based on 100 parts by weight of the polylactide resin. If the content is less than 0.1 part by weight, the effect due to the use of the branching agent is slight, and if the content exceeds 10 parts by weight, the physical properties of the polylactide resin composition may be impaired.

Preferably, the branching agent is represented by the following: 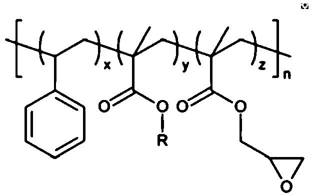 wherein,
x, y, and z represent the mole fraction of each repeating unit,
R is a heteroatom or a C₁₋₁₀ hydrocarbyl which may be unsubstituted or substituted with one or more functional moieties, and
n represents the repeating unit.

As the branching agent, a commercially available product can be used by way of example, and typically, Joncryl ADR 4468, which is an epoxy-based branching agent, can be used.

On the other hand, the method for producing the polylactide resin composition according to the present invention is not particularly limited as long as it is a method of mixing the polylactide resin, the polylactide oligomer whose end group is a carboxyl group, and a branching agent. In one example, each of the above components can be melted and mixed.

### [Advantageous Effects]

The polylactide resin composition according to the present invention includes a polylactide oligomer whose end group is a carboxyl group, and thus, has excellent melt strength due to a high branching effect while maintaining the advantages of biodegradation. In addition, the polylactide resin composition can be applied to molding processes such as blowing, blow molding, spinning, foaming, and paper coating through improvement of melt strength.

### [BRIEF DESCRIPTION OF THE DRAWINGS]

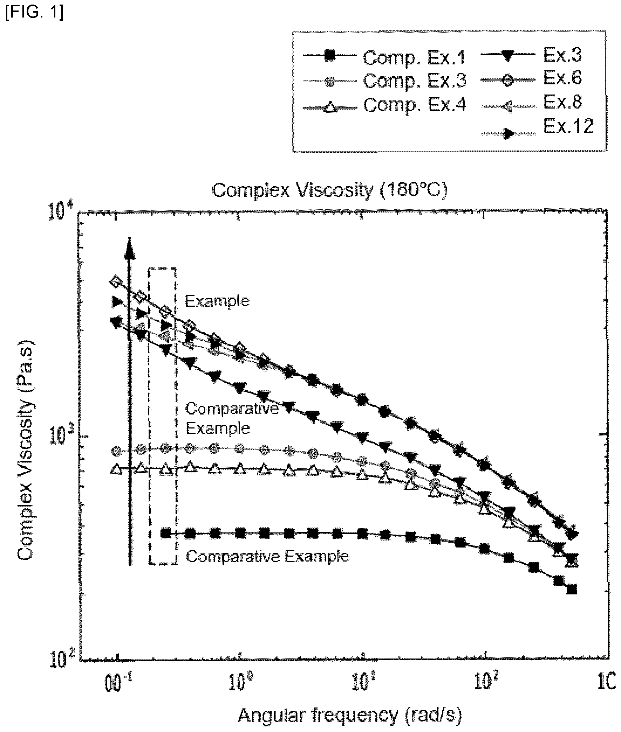

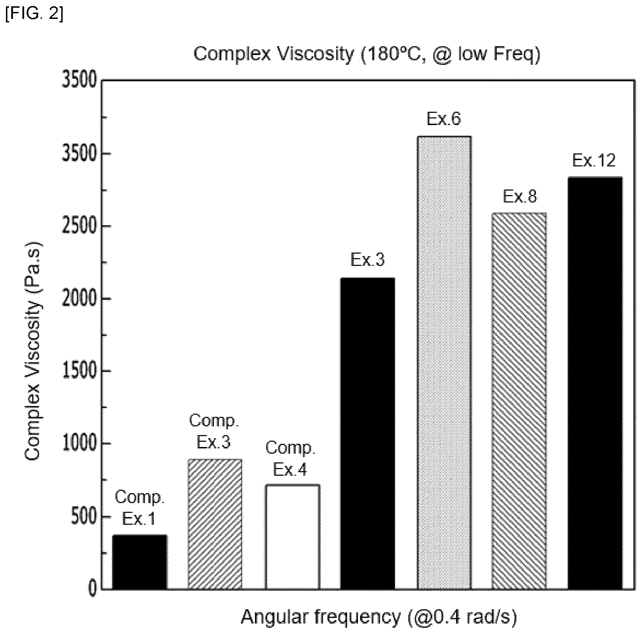

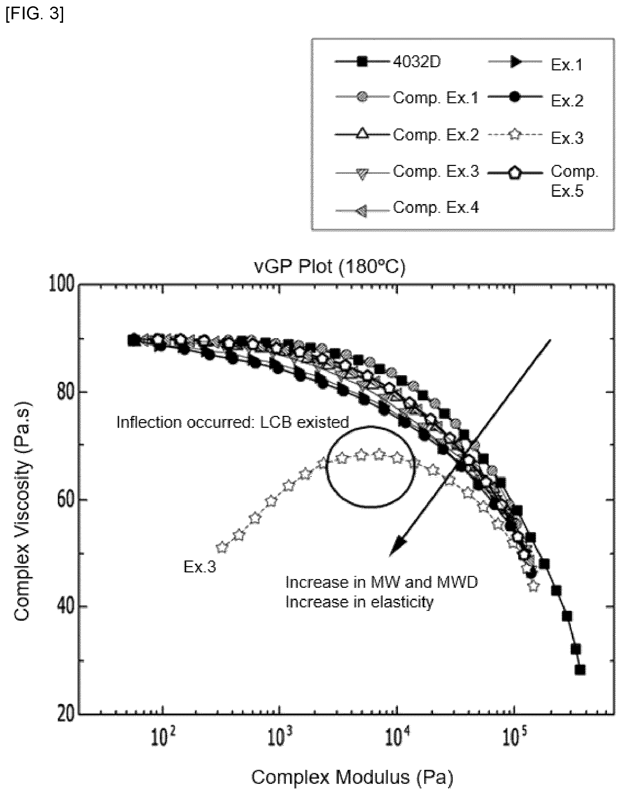

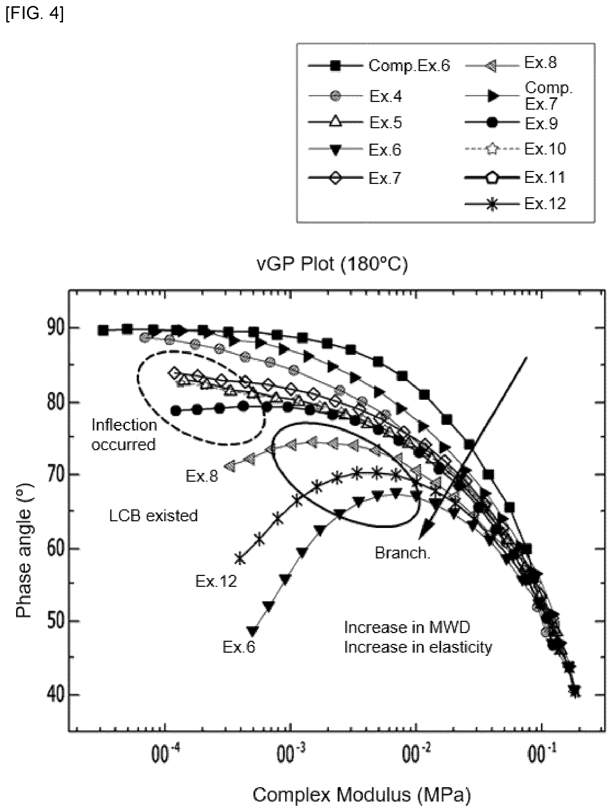

FIGS. 1 to 4 show the results of Experimental Examples of the present invention. '4032D' in FIG. 3 refers to the NW 4032D product having a weight average molecular weight of around 200,000.

### [DETAILED DESCRIPTION OF THE EMBODIMENTS]

Hereinafter, specific embodiments of the present invention will be described in more detail by way of the following examples. However, these examples are set forth to illustrate the invention, and the scope of the invention is not limited thereto.

### [Preparation Example] Preparation of PLA oligomer

### Preparation Example 1: Preparation of PT-SA

PLA oligomer was prepared using pentaerythritol (PT) as an initiator. Specifically, lactide: PT=100:1 (mole ratio) was added to a 500 mL reactor so that the total amount was 75 g, and Sn(Oct)₂ catalyst (0.075 g) was added thereto, and the mixture was reacted at 180°C for 5 hours to prepare an oligomer. In order to replace the hydroxy end group of the prepared oligomer with a carboxy group (COOH), the number of moles was calculated from the addition amount of the lactide (g) and the number average molecular weight of the prepared oligomer (g/mol), and the total hydroxy end groups of the prepared oligomer was calculated taking into account the number (4) of end groups of the initiator (PT). Next, 2 equivalents of succinic anhydride (SA) relative to the total hydroxy end groups of the oligomer were added to one-pot, and the reaction proceeded for an additional 3 hours. After completion of the reaction, the prepared PLA oligomer was precipitated/separated in CHCl₃/MeOH solvent system to remove unreacted SA and remaining impurities. Vacuum drying at 45 °C for 12 hours gave the final product, which was named "PT-SA".

### Preparation Example 2: Preparation of GL-SA

PLA oligomer was prepared in the same manner as in Preparation Example 1, except that glycerol (GL) was used instead of pentaerythritol (PT), and this was named 'GL-SA'.

### Preparation Example 3: Preparation of SB-SA

PLA oligomer was prepared in the same manner as in Preparation Example 1, except that D-sorbitol (SB) was used instead of Pentaerythritol (PT), and this was named 'SB-SA'.

### Preparation Example 4: Preparation of MI-SA

PLA oligomer was prepared in the same manner as in Preparation Example 1, except that Myo-inositol (MI) was used instead of Pentaerythritol (PT), and this was named 'MI-SA'.

### Preparation Example 5: Preparation of GL-O

PLA oligomer was prepared in the same manner as in Preparation Example 1, except that glycerol (GL) was used instead of pentaerythritol (PT) and reacted with succinic anhydride (SA), and this was named 'GL-O'.

The weight average molecular weight of the PLA oligomers prepared in Preparation Examples 1 to 5 was measured. Specifically, the weight average molecular weight (Mw) was measured using a GPC (Gel Permeation Chromatography) device. Specific measurement conditions are as follows.
- Column: PLgel Mixed E x 2
- Solvent: THF
- Flow rate: 0.7 mL/min
- Sample concentration: 3.0 mg/mL
- Injection volume: 100 µl
- Column temperature: 40°C
- Detector: Waters 2414 RID
- Standard: PS (polystyrene)

The results are shown in Table 1 below.

### [Example] Preparation of polylactide resin composition

### Example 1

Melt blending was performed using a Brabender Mixer device. Specifically, 50 g of PLA pellet (Anhui BBCA Biochemical & Futerro PLA Corp, FY 201, Mw=113,000), 2.5 g of GL-SA previously prepared as PLA-oligomer, and 0.5 g of epoxy-based branching agent (Joncryl ADR 4468) were mixed and simultaneously added to a Brabender Mixer device, and mixed at 200°C for 10 minutes to prepare a polylactide resin composition.

### Examples 2 to 12

A polylactide resin composition was prepared in the same manner as in Example 1, except that the type and content of the remaining components other than the PLA pellet were changed as shown in Table 1 below.

### Comparative Examples 1 to 7

A polylactide resin composition was prepared in the same manner as in Example 1, except that the type and content of the remaining components other than the PLA pellet were changed as shown in Table 1 below. In Table 1, the content of each component being 0 means that it was produced by eliminating that component.

**[Table 1]**

| | Polylactide resin (prts.wt.) | Type of polylactide oligomer | Molecular weight of polylactide oligomer | Amount of polylactide oligomer used (prts.wt.) | Branching agent (prts.wt.) |
|---|---|---|---|---|---|
| Example 1 | 100 | GL-SA | 24,100 | 5 | 1 |
| Example 2 | 100 | GL-SA | 24,100 | 5 | 3 |
| Example 3 | 100 | GL-SA | 24,100 | 10 | 3 |
| Example 4 | 100 | GL-SA | 24,100 | 10 | 1 |
| Example 5 | 100 | PT-SA | 40,000 | 5 | 1 |
| Example 6 | 100 | PT-SA | 40,000 | 10 | 3 |
| Example 7 | 100 | SB-SA | 41,100 | 5 | 1 |
| Example 8 | 100 | SB-SA | 41,100 | 10 | 3 |
| Example 9 | 100 | PT-SA | 40,000 | 10 | 1 |
| Example 10 | 100 | MI-SA | 39,800 | 5 | 1 |
| Example 11 | 100 | MI-SA | 39,800 | 10 | 1 |
| Example 12 | 100 | MI-SA | 39,800 | 10 | 3 |
| Comparative Example 1 | 100 | - | 0 | 0 | 0 |
| Comparative Example 2 | 100 | - | 0 | 0 | 0.5 |
| Comparative Example 3 | 100 | - | 0 | 0 | 1 |
| Comparative Example 4 | 100 | - | 0 | 0 | 3 |
| Comparative Example 5 | 100 | GL-O | 31,900 | 5 | 3 |
| Comparative Example 6 | 100 | GL-SA | 24,100 | 10 | 0 |
| Comparative Example 7 | 100 | SA¹⁾ | | 0.5 | 1 |
| 1) Succinyl anhydride was used instead of PLA oligomer | | | | | |

### Experimental Example: Evaluation of rheological properties

Rheological properties were measured using TA Instruments ARES-G2 Rheometer ((Strain-Controlled Type)/ Geometry: 25 mm diameter Parallel Plate, 1 mm Gap).
- Measurement conditions: 180°C Temperature, 0.1 rad/s ~ 500 rad/s Angular Frequency, 5-10% Strain
- Setting appropriate strain depending on the sample through Amplitude Sweep (between 5% and 10% for the measured PLA)
- Comparison between Phase Angle and Complex Modulus (vGP Plot): Phase Angle is a criterion for determining whether the behavior of a sample is closer to either of solid/fluid, and generally, as it is closer a solid, the Complex Modulus more increases (in the case of LCB, the relationship is not linear and inflection occurs, unlike linear polymers)

The results are shown in FIGS. 1 to 4. As shown in FIGS. 1 to 4, when using a branching agent or a PLA-SA-Oligomer alone in a polylactide resin with a low acid value, it was difficult to expect a branching effect even if the content was increased (Comparative Examples 1 to 4, and Comparative Example 6). In addition, when using GL-O without substitution of the end group, a molecular weight reduction phenomenon (polylactide resin decomposition due to transesterification of the OH group) occurred (Comparative Example 5). Further, the combination of polylactide resin, SA and branching agent instead of PLA-SA-oligomer did not exhibit the branching effect (Comparative Example 7). However, it could be confirmed that when the branching agent and PLA-SA-Oligomer were applied simultaneously as in the present invention, the melt strength was improved due to an increase in complex viscosity (Examples 1 to 12).

## Claims

1. A polylactide resin composition comprising:
a polylactide resin,
a polylactide oligomer whose end group is a carboxyl group, and
a branching agent.

2. The polylactide resin composition of claim 1, wherein:
the polylactide resin has a weight average molecular weight of 70,000 to 400,000.

3. The polylactide resin composition of claim 1, wherein:
the polylactide oligomer whose end group is a carboxyl group is contained in an amount of 1 to 20 parts by weight based on 100 parts by weight of the polylactide resin.

4. The polylactide resin composition of claim 1, wherein:
the polylactide oligomer whose end group is a carboxyl group is any one selected from the group consisting of: 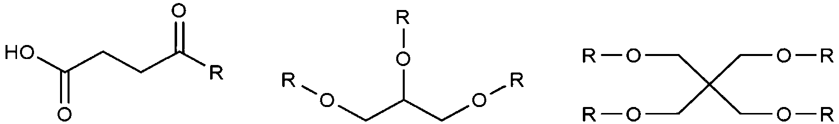 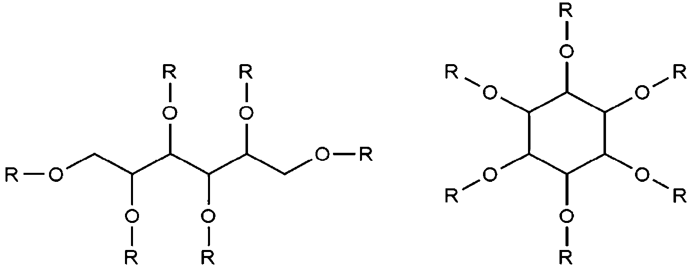
wherein, R is a substituent represented by the following Chemical Formula 2:

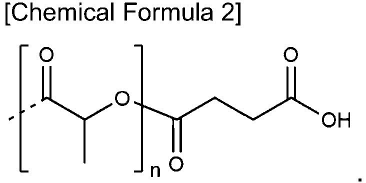

5. The polylactide resin composition of claim 1, wherein:
the polylactide oligomer whose end group is a carboxyl group is 1,000 to 70,000.

6. The polylactide resin composition of claim 1, wherein:
the branching agent is contained in an amount of 0.1 to 10 parts by weight based on 100 parts by weight of the polylactide resin.

7. The polylactide resin composition of claim 1, wherein:
the branching agent is represented by the following: 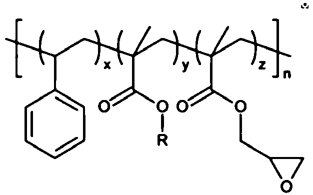 wherein,
x, y, and z represent the mole fraction of each repeating unit,
R is a heteroatom or a C₁₋₁₀ hydrocarbyl which may be unsubstituted or substituted with one or more functional moieties, and
n represents the repeating unit.

8. The polylactide resin composition of claim 1, wherein:
the branching agent has a weight average molecular weight of 1,000 to 70,000.
